# EUROPÄISCHE PATENTANMELDUNG

(11) **EP 0 738 631 A1**
(43) Veröffentlichungstag der Anmeldung: **23.10.1996**
(21) Anmeldenummer: 96105319.6
(22) Anmeldetag: 03.04.1996
(51) Int. Cl.: B60R 21/26

(54) **Pyrotechnischer Gasgenerator mit zwei getrennten Brennkammern**

(30) Priorität: 22.04.1995 DE 19514896; 29.08.1995 DE 19531667
(71) Anmelder: TEMIC Bayern-Chemie Airbag GmbH, D-84544 Aschau (DE)
(72) Erfinder: Bauer, Hermann, 83339 Stöttham (DE); Bender, Richard, Dr., 91207 Lauf (DE); Fürst, Franz, 84453 Mühldorf (DE); Vetter, Bernhard, 83052 Bruckmühl (DE); Winterhalder, Marc, 84518 Garching/Alz (DE); Zeuner, Siegfried, Dr., 81369 München (DE)
(74) Vertreter: Maute, Hans-Jürgen, Dipl.-Ing.

(57) **Zusammenfassung**

Die Erfindung betrifft einen Rohr-Gasgenerator (1) zum Befüllen eines Prallsacks in einem Rückhaltesystem für Kraftfahrzeuginsassen, wobei zwei separate Brennkammereinheiten (10,20) ein gemeinsames Verbindungsstück (3) aufweisen und jede Brennkammereinheit (10,20) eine Anzündeinheit (11,21) mit jeweiligen Filtern (16,17,26,27) aufweist.

## Beschreibung

Die Erfindung betrifft einen pyrotechnischen Gasgenerator mit zwei getrennten Brennkammereinheiten nach dem Oberbegriff des Patentanspruchs 1.

Ein derartiger Gasgenerator ist aus der US 5,219,178 bekannt. Der darin beschriebene Gasgenerator weist jedoch zumindest den **Nachteil** auf, daß beide Brennkammern einen gemeinsamen Filter nützen, wodurch keine optimale Anpassung des Filters an die beiden verschiedenen Treibsätze möglich ist. Hintergrund ist die Tatsache, daß die Art und weise, wie ein Prallsack befüllt wird, ganz wesentlich nicht nur von der chemischen Zusammensetzung des verwendeten Treibstoffs, sondern auch von der Beschaffenheit und Anordnung der Filter abhängt. Deshalb müssen für jedes gaserzeugende Gemisch speziell hierauf abgestimmte Filter verwendet werden.

Es ist deshalb **Aufgabe der Erfindung**, einen Gasgenerator anzugeben, der die vorgenannten Nachteile vermeidet.

Diese Aufgabe wird **gelöst**, indem zwei separate Brennkammereinheiten ein gemeinsames Verbindungsstück aufweisen und indem jede Brennkammereinheit eine Anzündeinheit mit jeweiligen Filtern aufweist.

In den Unteransprüchen sind weitere vorteilhafte Weiterbildungen des erfindungsgemäßen Gasgenerators beschrieben.

Demgemäß weist jede Brennkammereinheit eine eigene Brennkammer mit darin angeordneten Treibstofftabletten als Festtreibstoff und einem Vorfilter auf und ist mit einem speziell auf sie abgestimmten Feinfilter radial umgeben. Um zu einer kostengünstigen Fertigung zu kommen, werden beide Brennkammereinheiten vormontiert und bei der Endmontage in ein entweder gemeinsames oder jeweils in ein separates, rohrförmiges Filtergehäuse mit Ausblasöffnungen eingeschoben. Anschließend wird das gemeinsame bzw. die beiden separaten, rohrförmigen Filtergehäuse an einem Ende umgebördelt.

Die **Vorteile** der Erfindung liegen neben der optimalen Anpassung der jeweiligen Filterkammern an den jeweiligen Treibsatz insbesondere darin, daß die beiden Brennkammern zeitlich versetzt gezündet werden können, wodurch bei einer Auslösung eine stufenweise Anpassung der Leistungsabgabe an die Unfallschwere vorgenommen werden kann, indem ein an den Gasgenerator angeschlossener Prallsack schneller oder langsamer, hart oder weniger hart aufgeblasen wird. Auch kann durch eine zeitlich versetzte Zündung der beiden Treibsätze die Zeit verlängert werden, in der der Prallsack aufgeblasen bleibt.

Zwei **Ausführungsbeispiele** der Erfindung sind nachstehend ausführlich erläutert und anhand der Figuren dargestellt.

Es zeigen
- Fig. 1:: ein erstes Ausführungsbeispiel des erfindungsgemäßen Gasgenerators mit einem gemeinsamen Filtergehäuse für beide Brennkammereinheiten und
- Fig. 2:: ein zweites Ausführungsbeispiel des erfindungsgemäßen Gasgenerators mit jeweils einem separaten Filtergehäuse für beide Brennkammereinheiten.

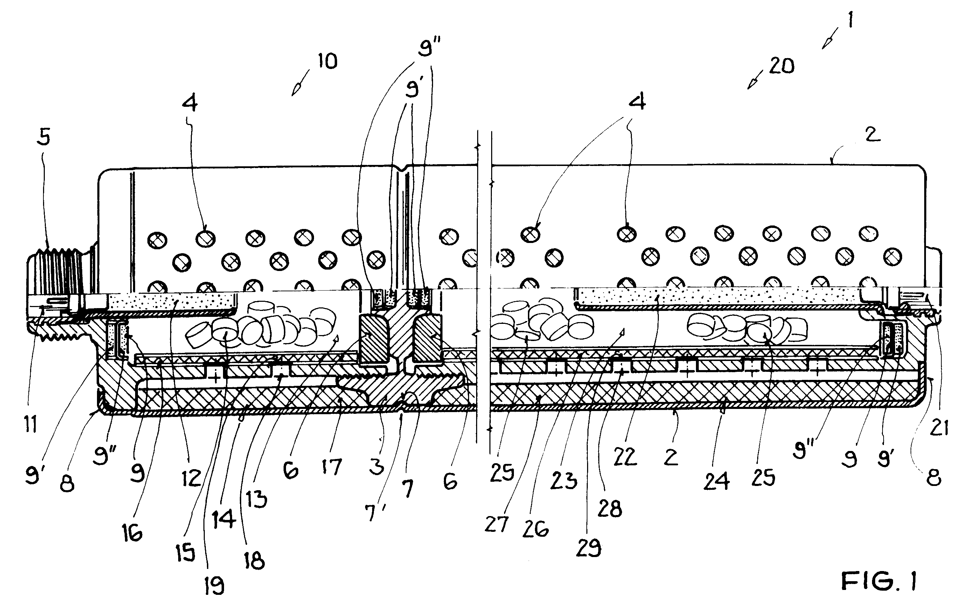

Ein Rohr-Gasgenerator 1 gemäß **Fig. 1** besteht aus einer ersten Brennkammereinheit 10 und einer zweiten Brennkammereinheit 20. Dabei weist die erste Brennkammereinheit 10 einen elektrischen Anzünder 11, eine Verstärkerladung 12, eine Brennkammer 13 mit Treibstofftabletten 15 als Festtreibstoff, einem Vorfilter 16 und Durchströmöffnungen 18 und eine Filterkammer 14 mit einem Feinfilter 17 auf.

Die zweite Brennkammereinheit 20 enthält einen elektrischen Anzünder 21, eine Verstärkerladung 22, eine Brennkammer 23 mit Treibstofftabletten 25 als Festtreibstoff, einem Vorfilter 26 und Durchströmöffnungen 28 und eine Filterkammer 24 mit einem Feinfilter 27. Die Brennkammereinheiten 10 und 20 weisen ein gemeinsames Verbindungsstück 3 auf und werden durch ein gemeinsames Filtergehäuse 2 zusammengehalten, das Ausblasöffnungen 4 und einen Befestigungsbolzen 5 aufweist. Bei feuchtigkeitsempfindlichen Treibstofftabletten 15 bzw. 25 müssen die Durchströmöffnungen 18 bzw. 28 oder die Ausblasöffnungen 4 mittels einer Dichtfolie 19 bzw. 29, beispielsweise mit einer Aluminiumfolie, verschlossen werden, um den Treibstoff daran zu hindern, Feuchtigkeit aufzunehmen. Zum Volumenausgleich sind zwischen den Treibstofftabletten 15 bzw. 25 und das Verbindungsstück 3 Füllkörper 6, beispielsweise ein Maschengestrick, eingelegt.

Um bei einem Brand während der Lagerung des Gasgenerators 1 oder bei einem Fahrzeugbrand mit eingebautem Gasgenerator 1 ein Fragmentieren des Filtergehäuses 2 zu verhindern, müssen die Treibstofftabletten 15 bzw. 25 abbrennen, bevor das Filtergehäuse 2 aufgrund der hohen Temperatur seine mechanische Festigkeit verliert. Hierzu besitzt jede Brennkammereinheit 10 bzw. 20 Frühzündbehälter 9 mit Frühzündpellets 9' und jeweils einer Abdeckung 9''. Damit die Frühzündpellets 9' im Fall eines Brandes möglichst schnell ihre Zündtemperatur erreichen und die Treibstofftabletten 15 bzw. 25 entzünden, deren Selbstzündtemperatur erheblich höher liegt, sind sie in unmittelbarer Nähe zum metallenen Filtergehäuse 2 oder zum metallenen Verbindungsstück 3 angeordnet, wo ein guter Wärmetransport stattfindet.

Die Anzünder 11 bzw. 21, die Verstärkerladungen 12 bzw. 22 und die Treibstofftabletten 15 bzw. 25 können von gleicher oder unterschiedlicher Beschaffenheit sein, je nachdem, welche Gasströme von der jeweiligen Brennkammer 13 bzw. 23 bei einer Auslösung erzeugt werden sollen. Mit dem auf die jeweilige Brennkammereinheit 10 bzw. 20 abgestimmten Feinfilter 17 bzw. 27 wird hierdurch die Zeit bestimmt, in welcher das erzeugte Gasvolumen in einen angeschlossenen Prallsack eingeblasen werden soll.

Zweckmäßigerweise wird für jede Brennkammereinheit 10 bzw. 20 ein eigener und optimal auf den Treibstoff 15 bzw 25 abgestimmter Vorfilter 16 bzw. 26 und Feinfilter 17 bzw. 27 verwendet.

Eine kostengünstige Herstellungsweise des erfindungsgemäßen Rohr-Gasgenerators 1 wird erreicht, indem jede Brennkammereinheit 10 bzw. 20 für sich vormontiert und bei der Endmontage in ein gemeinsames Filtergehäuse 2, getrennt durch ein gemeinsames Verbindungsstück 3, eingebracht werden.

Zur Fixierung des Verbindungsstücks 3 im Filtergehäuse 2 weist das Verbindungsstück 3 an seiner Außenseite eine rundliche Aussparung 7 auf. Vorzugsweise durch Rollen wird nach dem Einschieben der Brennkammereinheiten 10 und 20 und des Verbindungsstücks 3 im Filtergehäuse 2 an der entsprechenden Stelle eine Sicke 7' erzeugt, die sich in die rundliche Aussparung 7 des Verbindungsstücks 3 einfügt. Durch diese Fügung aus Sicke 7' und Aussparung 7 wird zudem eine gute Wärmeleitfähigkeit zwischen Filtergehäuse 2 und Verbindungsstück 3 gewährleistet.

Zum Schluß wird das offene Ende des rohrförmigen Filtergehäuses 2 umgerollt, so daß jeweils eine Bördelung 8 entsteht, mit der die Einbauten des Gasgenerators 1 zusammengehalten werden.

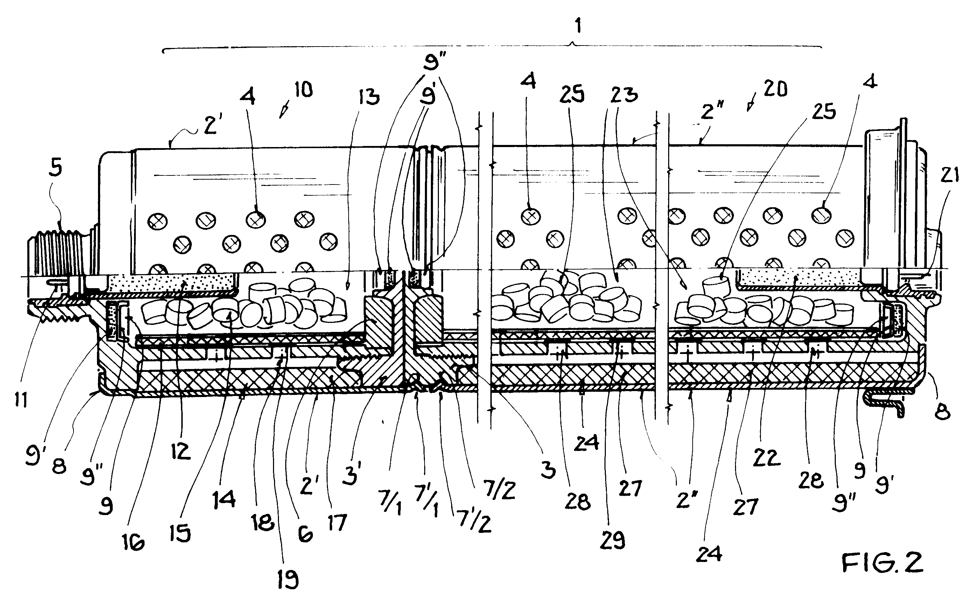

In **Fig. 2** ist ein weiterer erfindungsgemäßer Gasgenerator 1 dargestellt. Im unterschied zu dem in Fig. 1 gezeigten Ausführungsbeispiel werden in zwei separaten Filtergehäusen 2' und 2'' mit Ausblasöffnungen 4 eine erste und eine zweite Brennkammereinheit 10 und 20 angeordnet. Die beiden Filtergehäuse 2' und 2'' werden mit einem gemeinsamen Verbindungsstück 3 zusammengehalten, indem das Verbindungsstück 3 an seiner Außenseite zwei rundliche Aussparungen 7/1 und 7/2 aufweist. Ein Endstück 3' dient als Deckel für die Brennkammereinheit 10. Als Variante können Verbindungsstück 3 und Endstück 3' auch einstückig ausgebildet sein.

Vorzugsweise durch Rollen wird nach dem Einschieben der Brennkammereinheiten 10 und 20 und des Verbindungsstücks 3 in das jeweilige Filtergehäuse 2' bzw. 2'' an der entsprechenden stelle eine Sicke 7'/1 bzw. 7'/2 erzeugt, die sich jeweils in die rundliche Aussparung 7/1 bzw. 7/2 des Verbindungsstücks 3 einfügt. Durch diese Fügung aus Sicke 7'/1 bzw. 7'/2 und Aussparung 7/1 bzw. 7/2 wird zudem eine gute Wärmeleitfähigkeit zwischen den Filtergehäusen 2' und 2'' und dem Verbindungsstück 3 gewährleistet.

Auch bei diesem Ausführungsbeispiel ist jede Brennkammereinheit 10 und 20 für sich alleine voll funktionsfähig, da sie über eine Anzündeinheit 11 bzw. 21 mit Verstärkerladung 12 bzw. 22, über ein Brennkammerrohr 13 bzw. 23 mit Treibstofftabletten 15 bzw. 25, Vorfilter 16 bzw. 26 und Durchströmöffnungen 18 bzw. 28 und über eine Filterkammer 14 bzw. 24 mit Feinfilter 17 bzw. 27 verfügen. Jede Durchströmöffnung 18 bzw. 28 oder jede Ausblasöffnung 4 ist mittels einer Dichtfolie 19 bzw. 29, beispielsweise einer Aluminiumfolie, luftdicht verschlossen, um eindringende Feuchtigkeit abzuhalten.

Im gezeigten Ausführungsbeispiel weist der Gasgenerator 1 an der außenliegenden Stirnseite des Filtergehäuses 2' einen Befestigungsbolzen 5 auf, mit dem der Gasgenerator 1 an der Struktur eines Fahrzeugs befestigt wird. Um bei einem Brand ein Fragmentieren zu verhindern, weist der Gasgenerators 1 Frühzündbehälter 9 mit Abdeckungen 9'' auf, die bekannte und deshalb nicht näher beschriebene Frühzündpellets 9' enthalten.

Bei der Endmontage der bereits vorgefertigen Brennkammereinheiten 10 und 20 wird das jeweils noch offene Ende der rohrförmigen Filtergehäuse 2' und 2'' umgerollt, so daß jeweils eine Bördelung 8 entsteht, mit der die Einbauten des Gasgenerators 1 zusammengehalten werden.

## Patentansprüche

1. Gasgenerator (1) zum Befüllen eines Prallsacks in einem Rückhaltesystem für Kraftfahrzeuginsassen, **dadurch gekennzeichnet**, daß zwei separate Brennkammereinheiten (10, 20) ein gemeinsames Verbindungsstück (3) aufweisen und daß jede Brennkammereinheit (10, 20) eine Anzündeinheit (11, 21) mit jeweiligen Filtern (16, 17, 26, 27) aufweist.

2. Gasgenerator nach Anspruch 1, **dadurch gekennzeichnet**, daß die Brennkammereinheiten (10, 20) in einem gemeinsamen Filtergehäuse (2) angeordnet sind.

3. Gasgenerator nach Anspruch 1, **dadurch gekennzeichnet**, daß die Brennkammereinheiten (10, 20) jeweils in einem separaten Filtergehäuse (2', 2'') angeordnet sind.

4. Gasgenerator nach Anspruch 1, 2 oder 3, **dadurch gekennzeichnet**, daß die Brennkammereinheiten (10, 20) jeweils aus einem Brennkammerrohr (13, 23) bestehen und axial zueinander angeordnet sind.

5. Gasgenerator nach Anspruch 2 und 4, **dadurch gekennzeichnet**, daß das Verbindungsstück (3) außen an seinem Umfang eine rundliche Aussparungen (7) zur Bildung einer Sicken-Verbindung mit dem gemeinsamen Filtergehäuse (2) aufweist.

6. Gasgenerator nach Anspruch 3 und 4, **dadurch gekennzeichnet**, daß das Verbindungsstück (3) außen an seinem Umfang zwei rundliche Aussparungen (7/1, 7/2) zur Bildung je einer Sicken-Verbindung mit den separaten Filtergehäusen (2', 2'') aufweist.

7. Gasgenerator nach Anspruch 5 oder 6, **dadurch gekennzeichnet**, daß das bzw. jedes Filtergehäuse (2', 2'') am freien Ende eine Bördelung (8/1, 8/2) zur formschlüssigen Verbindung mit der jeweiligen Brennkammereinheit (10, 20) aufweist.

8. Gasgenerator nach einem der vorangehenden Ansprüche, **dadurch gekennzeichnet,** daß die Anzündeinheiten (11, 21) an den einander abgewandten Seiten der Brennkammereinheiten (10, 20) angeordnet sind.

9. Gasgenerator nach einem der vorangehenden Ansprüche, **dadurch gekennzeichnet**, daß sich bei jeder Brennkammereinheit (10, 20) eine Verstärkerladung (12, 22) in axialer Richtung an die Anzündeinheit (11, 21) anschließt.

10. Gasgenerator nach einem der vorangehenden Ansprüche, **dadurch gekennzeichnet**, daß in jeder Brennkammereinheit (10, 20) als Festtreibstoff Treibstofftabletten (15, 25) enthalten sind.

11. Gasgenerator nach einem der vorangehenden Ansprüche, **dadurch gekennzeichnet**, daß in jeder Brennkammereinheit (10, 20) ein Vorfilter (16, 26) vor Durchströmöffnungen (18, 28) angeordnet ist.

12. Gasgenerator nach Anspruch 11, **dadurch gekennzeichnet**, daß die Durchströmöffnungen (18, 28) innen mit einer Dichtfolie (19, 29) verschlossen sind.

13. Gasgenerator nach Anspruch 12, **dadurch gekennzeichnet**, daß die Dichtfolie (19, 29) aus Aluminium besteht.

14. Gasgenerator nach Anspruch 4, **dadurch gekennzeichnet**, daß radial um jedes Brennkammerrohr (13, 23) eine Filterkammer (14, 24) mit Feinfilter (17, 27) angeordnet ist.
